(19) Europäisches Patentamt
European Patent Office
Office européen des brevets

(11)  **EP 3 300 430 B1**

(12)  **EUROPEAN PATENT SPECIFICATION**

(45) Date of publication and mention
of the grant of the patent:
**01.05.2019  Bulletin 2019/18**

(51) Int Cl.:
***H04W 48/06*** (2009.01)

(21) Application number: **16306219.3**

(22) Date of filing: **22.09.2016**

(54)  **METHOD AND SYSTEM FOR CONTROLLING CHANNEL ACCESS IN AN ACCESS NETWORK**

VERFAHREN UND SYSTEM ZUR STEUERUNG DES KANALZUGANGS IN EINEM ZUGANGSNETZWERK

PROCÉDÉ ET SYSTÈME D'ACCÈS AU CANAL DE COMMANDE D'UN RÉSEAU D'ACCÈS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.03.2018  Bulletin 2018/13**

(73) Proprietor: **Alcatel Lucent
91620 Nozay (FR)**

(72) Inventors:
• **GACANIN, Haris
2018 Antwerp (BE)**

• **ROSTAMI, Soheil
2018 Antwerp (BE)**

(74) Representative: **D'Halleweyn, Nele Veerle Trees Gertrudis et al
Arnold & Siedsma
Bezuidenhoutseweg 57
2594 AC The Hague (NL)**

(56) References cited:
**EP-A1- 1 737 165     US-A1- 2015 124 601**

**Description**

Field of Invention

The present invention relates to controlling channel access. Particular embodiments relate to a method, system and computer program product, for remotely controlling channel access in a contention-based packet-switched access network.

Background

A number of optimisation methods for IEEE 802.11e EDCA (enhanced distributed channel access) access networks are known. However, these approaches are based on runtime optimisations, which incur computational and implementation complexity. Furthermore, the known approaches provide QoS (quality of service) support for multimedia applications without ensuring requirements of high-sensitive VoWiFi (voice over Wi-Fi) applications. This may lead to disruption and delay on voice transmission.

IEEE 802.11e EDCA is designed to provide prioritised QoS by enhancing the contention-based distributed coordination function (DCF) of the original IEEE 802.11 standard. Each node (access point (AP) or station (STA)) senses the channel and can transmit a packet if the channel is sensed to be idle for a time equal to the arbitrary inter-frame space (AIFS). If the channel is sensed to be busy, the node enters a back-off period, by selecting a back-off interval that is uniformly distributed between zero and a contention window (CW). Initially CW is set to a predefined minimum value CWmin. It is doubled after every transmission failure until CW reaches a predefined maximum value CWmax.

US 2015/124601 A1 discloses a method and apparatus for managing network traffic offloading, including determining based on a QoS mapping scheme whether a data flow should be offloaded from a first access point to a second access point, monitoring a perceived QoS of the offloaded data flow, and selectively causing a remedial action to be performed.

EP 1 737 165 A1 discloses an apparatus and method for providing enhanced wireless communication by obtaining predetermined parameters using an experiment in a wireless network environment to decrease traffic backoffs in real-time or to increase traffic throughputs in non real-time, and by applying the obtained parameters to access points and stations.

Summary

The reader is referred to the appended independent claims. Some preferred features are laid out in the dependent claims.

Service differentiation among distinct traffic access categories may be achieved by setting different CWmin, CWmax, and AIFS channel access parameters. According to the standard, default values for CWmin, CWmax and AIFS for the voice traffic access category are 2, 3, and 7 time slots respectively. The EDCA channel access parameters need to be set in order to adopt dynamic environments, so that they meet the QoS requirements of VoWiFi applications. Otherwise, the default settings of EDCA parameters may cause degradation of voice quality.

However, from a multi-vendor device management perspective following the standard, there is a problem to optimize the EDCA parameters of every access point per beacon time interval in practical networks. Practical networks may comprise at least several hundred households. In contrast to known approaches based on runtime optimization, a minimum observation time interval may for example be as short as 15 minutes.

Aspects of the present invention aim to set channel access parameters with practical network constraints, in particular in order to improve QoS (quality of experience) for VoWiFi applications.

According to a first aspect of the present invention there is provided a method for remotely controlling channel access in a contention-based packet-switched access network. The method comprises receiving at least one packet transmission failure parameter, indicating a number of packet transmission failures in the access network; receiving a packet transmission attempt parameter, indicating a number of packet transmission attempts in the access network; based on the received at least one packet transmission failure parameter, based on the received packet transmission attempt parameter, and based on at least one predetermined threshold, deciding whether or not to control channel access in the access network; and if it is decided so, setting at least one channel access parameter for accessing the access network based on a number of devices associated with the access network and based on the at least one predetermined threshold.

In this manner, by receiving the at least one packet transmission failure parameter and the received packet transmission attempt parameter, and based on how these (or at least one parameter derived from these) compare(s) to at least one predetermined threshold, channel access in the access network may be controlled, by deciding whether or not to control the channel access, and, if so, by setting at least one channel access parameter appropriately.

According to various aspects of the present invention, the at least one packet transmission failure parameter, the packet transmission attempt parameter, and the at least one channel access parameter relate exclusively to a voice traffic access category.

In this manner, QoS of VoWiFi applications may specifically be improved.

According to various aspects of the present invention, the at least one packet transmission failure parameter indicates a number of packet discard events in the access network. In a preferred aspect, the at least one channel access parameter comprises an arbitration inter-frame space number.

In this manner, a readily available parameter may be used to inform the deciding.

According to various aspects of the present invention, the deciding comprises comparing a ratio of the indicated number of packet discard events to the number of packet transmission attempts to the at least one predetermined threshold. In a preferred aspect, the at least one predetermined threshold comprises a threshold of circa 0.005.

In this manner, access may be controlled taking into account the severity of packet discarding.

According to various aspects of the present invention, the at least one packet transmission failure parameter indicates a number of packet transmission errors in the access network. In a preferred aspect, the at least one channel access parameter comprises a contention window length.

In this manner, a readily available parameter may be used to inform the deciding.

According to various aspects of the present invention, the deciding comprises comparing a ratio of the indicated number of packet transmission errors to the number of packet transmission attempts to the at least one predetermined threshold. In a preferred aspect, the at least one predetermined threshold comprises a threshold of circa 0.01.

In this manner, access may be controlled taking into account the severity of packet errors.

According to various aspects of the present invention, the at least one packet transmission failure parameter and the packet transmission attempt parameter are received from an access point of the access network.

In this manner, channel access may be controlled remotely.

According to another aspect of the present invention, there is provided a system for remotely controlling channel access in a contention-based packet-switched access network, from a management centre of that access network. The system comprises a receiving module, a decision module and a control module. The receiving module is configured for receiving at least one packet transmission failure parameter, indicating a number of packet transmission failures in the access network; and configured for receiving a packet transmission attempt parameter, indicating a number of packet transmission attempts in the access network. The decision module is configured for, based on the received at least one packet transmission failure parameter, based on the received packet transmission attempt parameter, and based on at least one predetermined threshold, deciding whether or not to control channel access in the access network. The control module is configured for, if it is decided so, setting at least one channel access parameter for accessing the access network based on a number of devices associated with the access network and based on the at least one predetermined threshold.

It will be understood by the skilled person that the features and advantages disclosed hereinabove with respect to various aspects of the method may also apply, *mutatis mutandis,* to various aspects of the system.

According to various aspects of the present invention, the at least one packet transmission failure parameter, the packet transmission attempt parameter, and the at least one channel access parameter relate exclusively to a voice traffic access category.

According to various aspects of the present invention, the at least one packet transmission failure parameter indicates a number of packet discard events in the access network. In a preferred embodiment, the at least one channel access parameter comprises an arbitration inter-frame space number.

According to various aspects of the present invention, the decision module is configured for comparing a ratio of the indicated number of packet discard events to the number of packet transmission attempts to the at least one predetermined threshold. In a preferred embodiment, the at least one predetermined threshold comprises a threshold of circa 0.005.

According to various aspects of the present invention, the at least one packet transmission failure parameter indicates a number of packet transmission errors in the access network. In a preferred aspect, the at least one channel access parameter comprises a contention window length.

According to various aspects of the present invention, the decision module is configured for comparing a ratio of the indicated number of packet transmission errors to the number of packet transmission attempts to the at least one predetermined threshold. In a preferred embodiment, the at least one predetermined threshold comprises a threshold of circa 0.01.

According to various aspects of the present invention, the receiving module is configured for receiving the at least one packet transmission failure parameter and the packet transmission attempt parameter from an access point of the access network.

According to yet another aspect of the present invention, there is provided a computer program product comprising a computer-executable program of instructions for performing, when executed on a computer, the steps of the method of any one of the method aspects described above.

It will be understood by the skilled person that the features and advantages disclosed hereinabove with respect to aspects of the method may also apply, *mutatis mutandis,* to aspects of the computer program product.

According to yet another aspect of the present invention, there is provided a digital storage medium encoding a computer-executable program of instructions to perform, when executed on a computer, the steps of the method of any one of the method aspects described above.

It will be understood by the skilled person that the features and advantages disclosed hereinabove with respect to aspects of the method may also apply, *mutatis mutandis,* to aspects of the digital storage medium.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figure 1 illustrates schematically an example network architecture comprising an embodiment of a system 1 according to the present invention;

Figure 2 illustrates schematically operation of an embodiment of a method according to the present invention, for example as performed by system 1 of Figure 1;

Figure 3 illustrates schematically operation of a further developed embodiment of a method according to the present invention, for example as performed by system 1 of Figure 1;

Figure 4 illustrates schematically operation of another further developed embodiment of a method according to the present invention, for example as performed by system 1 of Figure 1;

Figure 5A illustrates schematically a part of operation of another embodiment of a method according to the present invention, for example as performed by system 1 of Figure 1;

Figure 5B illustrates schematically a further part of operation of the other embodiment shown in Figure 5A; and

Figure 6 illustrates schematically an embodiment of a system 1 according to the present invention, for example a further development of system 1 of Figure 1.

Description of embodiments

A novel analytical model has been proposed in Yayu Gao; Xinghua Sun; Lin Dai, "IEEE 802.11e EDCA Networks: Modeling, Differentiation and Optimization," in Wireless Communications, IEEE Transactions on, vol.13, no.7, pp.3863-3879, July 2014 doi: 10.1109/TWC.2014.2327215, in order to address EDCA parameter optimisation. The state transition process is modeled of an individual packet of each access category as an embedded Markov chain. The method optimizes EDCA parameters dynamically during beacon interval. For this reason, the method needs to have access to PHY (physical) layer parameters such as holding time of packets in successful transmission and collision states. Moreover, it is assumed that the AP is equipped with a buffer of infinite size and the infinite number of retransmission attempts for each packet which both assumptions are not acceptable for VoWiFi traffic. Additionally, it is assumed that the channel is noiseless, which is not realistic and cannot be guaranteed in typical WLANs (wireless local area networks) due to presence of other managed APs and unmanaged neighbor APs.

Similarly, a model has been proposed in Inan, I.; Keceli, F.; Ayanoglu, E., "Analysis of the 802.11e enhanced distributed channel access function," in Communications, IEEE Transactions on , vol.57, no.6, pp.1753-1764, June 2009 doi: 10.1109/TCOMM.2009.06.0701132, that considers the effect of all EDCA QoS parameters on the performance for the whole traffic load range from a lightly-loaded non-saturated to a heavily congested saturated channel. Further, a homogeneous slot is assumed (that is, a constant probability of packet arrival per state as well as packets experiencing a collision with constant probability at an arbitrary back-off slot). In contrast to the above reference, it is shown in this reference that the MAC (medium access control) buffer size affects the EDCA performance significantly between under-loaded and saturation regimes.

A design-time algorithm has been developed in Minyoung Sung; Namhyun Yun, "A MAC parameter optimization scheme for IEEE 802.11e-based multimedia home networks," in Consumer Communications and Networking Conference, 2006. CCNC 2006. 3rd IEEE, vol.1, no., pp.390-394, 8-10 Jan. 2006 doi: 10.1109/CCNC.2006.1593053, for efficient exploration of the EDCA parameter space. Using the algorithm, a Pareto curve is derived for delay-throughput trade-off in each anticipated traffic environment. The Pareto database can then be used to adjust the parameter according to the traffic environment and administrative policies. Although this approach reduces complexity, knowledge is required of runtime traffic environments, such as number of real-time stations, number of non-real time stations, and total traffic load of real-time stations.

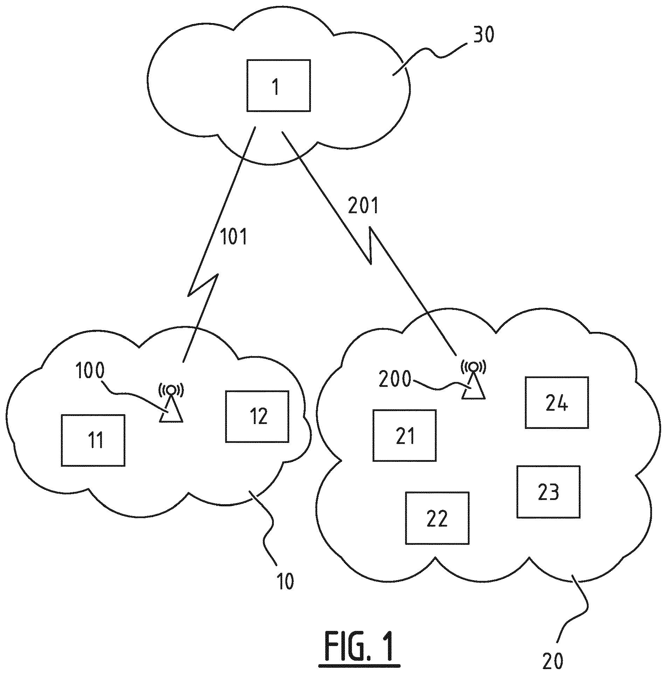

Figure 1 illustrates schematically an example network architecture comprising an embodiment of a system 1 according to the present invention. The figure shows a first network 10 comprising access point 100, station 11 and station 12, which may for example be wirelessly served by access point 100. The figure further shows a second network 20 comprising access point 200 and station 21, station 22, station 23 and station 24, which may for example be wirelessly served by access point 200. It will be understood that the number of networks and the number of respective stations is meant for illustrative purposes only and is not meant to limit the scope of protection, which is determined by the appended claims. First network 10 and second network 20 may in particular be contention-based packet-switched networks, for example wireless local area networks using IEEE 802.11-based technologies. The figure further shows a third network 30 comprising system 1 according to the present invention. System 1 may be connected to access point 100 via connection 101, and to access point 200 via connection 201. Connection 101 and connection 201 may for example allow remote control of access point 100 and access point 200 via the TR-069 protocol, by system 1. Operational and structural details of system 1 will be given below with reference to the other figures. Third network 30 may for example represent a management centre (MC). It will be understood that system 1 may operate remotely from the first network 10 and the second network 20. System 1 may for example form part of an auto-configuration server (ACS).

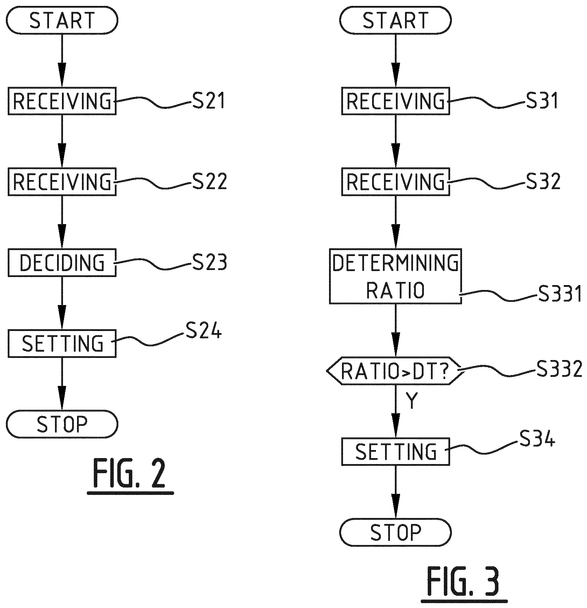

Figure 2 illustrates schematically operation of an embodiment of a method according to the present invention, for example as performed by system 1 of Figure 1. The figure shows operations S21, S22, S23 and S24.

In operation S21, at least one packet transmission failure parameter may be received. The at least one packet transmission failure parameter may indicate a number of packet transmission failures in the access network. Examples of packet transmission failures may include *inter alia* packet discard events (that is, a packet is dropped, e.g. because of (potential) buffer overflow) and packet transmission errors (that is, some error has occurred in a transmission of the relevant packet, which therefore is unlikely to reach its destination).

In operation S22, a packet transmission attempt parameter may be received. The packet transmission attempt parameter may indicate a number of packet transmission attempts (that is, a number representative of how many times it has been attempted to transmit a packet, including successful and unsuccessful transmissions) in the access network.

In operation S23, based on the received at least one packet transmission failure parameter, based on the received packet transmission attempt parameter, and based on at least one predetermined threshold, it may be decided whether or not to control channel access in the access network.

In operation S24, if it is decided so in operation S23, at least one channel access parameter for accessing the access network may be set based on a number of devices associated with the access network and based on the at least one predetermined threshold.

Figure 3 illustrates schematically operation of a further developed embodiment of a method according to the present invention, for example as performed by system 1 of Figure 1. The embodiment of Figure 3 relates in particular to the option described above with reference to operation S21, of using packet discard events.

Operation S31 may correspond to operation S21, with the specification that the at least one packet transmission failure parameter may indicate a number of packet discard events in the access network.

Operation S32 may correspond to operation S22.

Operations S331 and S332 may together correspond to operation S23. In operation S331, a ratio of the indicated number of packet discard events to the number of packet transmission attempts may be determined. In operation S332, the ratio may be compared to the at least one predetermined threshold, denoted DT (for discard threshold). In a preferred embodiment, the value of DT may be circa 0.005 - this is meant to include at least a range of 0.0005 to 0.05, and preferably a range of 0.0025 to 0.0075. If the result of the comparison in operation S332 is yes, then this may mean that it is decided to control channel access in the access network, as in operation S23.

Operation S34 may correspond to operation S24. In a preferred embodiment, the arbitrary inter-frame space number (AIFSN) may be set, as will be explained in more detail below.

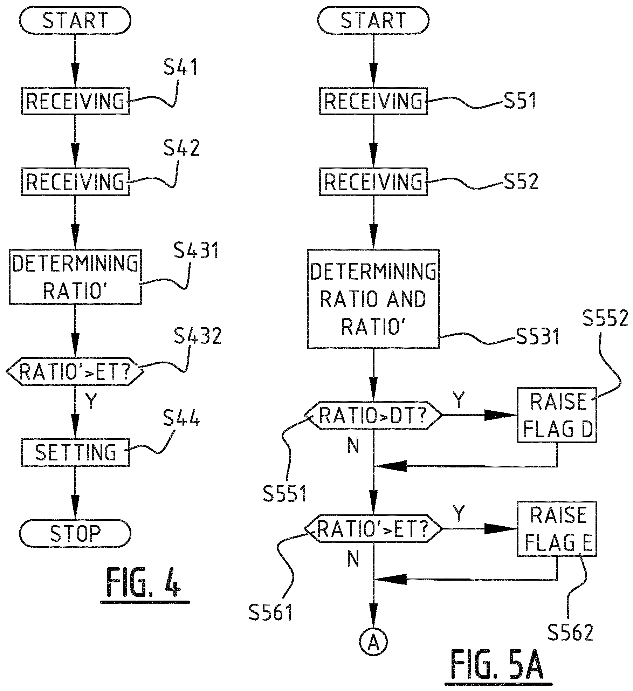

Figure 4 illustrates schematically operation of another further developed embodiment of a method according to the present invention, for example as performed by system 1 of Figure 1. The embodiment of Figure 4 relates in particular to the option described above with reference to operation S21, of using packet transmission errors.

Operation S41 may correspond to operation S21, with the specification that the at least one packet transmission failure parameter may indicate a number of packet transmission errors in the access network.

Operation S42 may correspond to operation S22.

Operation S431 and S432 may together correspond to operation S23. In operation S431, a ratio, denoted in the figure as RATIO', of the indicated number of packet transmission errors to the number of packet transmission attempts may be determined. In operation S432, the ratio may be compared to the at least predetermined threshold, denoted ET (for error threshold). In a preferred embodiment, the value of ET may be circa 0.01- this is meant to include at least a range of 0.001 to 0.1, and preferably a range of 0.005 to 0.02. If the result of the comparison in operation S432 is yes, then this may mean that it is decided to control channel access in the access network, as in operation S23.

Operation S44 may correspond to operation S24. In a preferred embodiment, the contention window (CW) length may be set, as will be explained in more detail below.

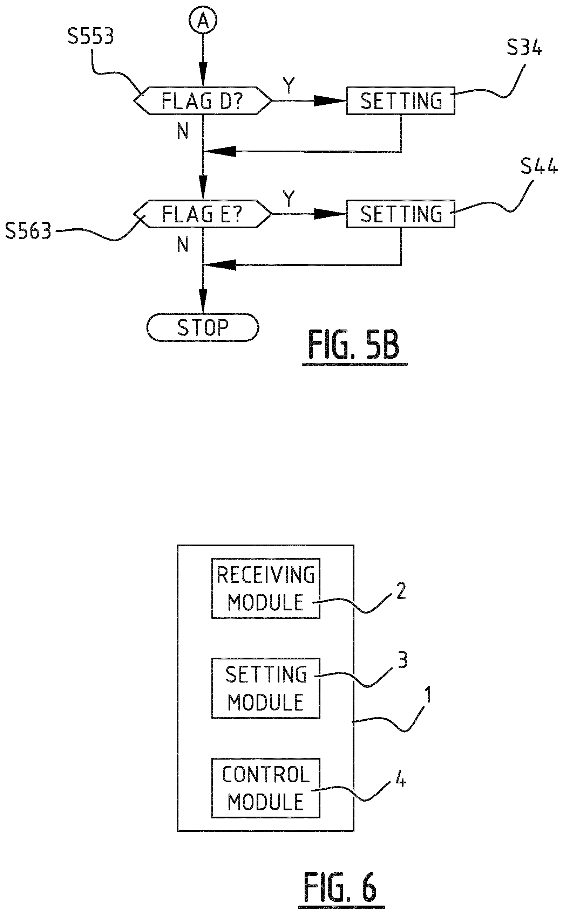

Figure 5A illustrates schematically a part of operation of another embodiment of a method according to the present invention, for example as performed by system 1 of Figure 1. The embodiment of Figure 5A relates in particular to both options described above with reference to operation S21, of using both packet discard events and packet transmission errors. Consequently, Operation S51 comprises the combination of operations S31 and S41, operation S52 comprises the combination of operations S32 and S42, operation S531 comprises the combination of operations S331 and S431, operation S551 corresponds to operation S332 and operation S561 corresponds to operation S432. Additionally, operation S552 and operation S562 are added, as an example of an optional implementation in order to distinguish between the two separate decisions of operations S551 and S561. Operation S552 comprises raising a flag denoted FLAG D, in order to indicate that it has been decided to control channel access in the access network at least with respect to the packet discard events and the discard threshold. Operation S562 comprises raising a flag denoted FLAG E, in order to indicate that it has been decided to control channel access in the access network at least with respect to the packet transmission errors and the error threshold. The figure shows that operation continues on to Figure 5B. It will be understood that the specific order of operations S551 and S561 may be rearranged.

Figure 5B illustrates schematically a further part of operation of the other embodiment shown in Figure 5A. In operation S553, it is determined whether or not FLAG D, as described above with reference to Figure 5A, is raised. If so, operation continues to operation S34, which corresponds to operation S34 of Figure 3. In either result of the determination, operation continues to operation S563, wherein it is determined whether or not FLAG E, as described above with reference to Figure 5B, is raised. If so operation continues to operation S44, which corresponds to operation S44 of Figure 4. It will be understood that the specific order of operation S553 and S563 may be rearranged.

Figure 6 illustrates schematically an embodiment of a system 1 according to the present invention, for example a further development of system 1 of Figure 1. System 1 is suitable for remotely controlling channel access in a contention-based packet-switched access network (for example first network 10 and/or second network 20 of Figure 1), from a management centre of that access network. System 1 comprises a receiving module 2, a decision module 3 and a control module 4. The receiving module 2 is configured for receiving at least one packet transmission failure parameter, indicating a number of packet transmission failures in the access network; and configured for receiving a packet transmission attempt parameter, indicating a number of packet transmission attempts in the access network. The decision module 3 is configured for, based on the received at least one packet transmission failure parameter, based on the received packet transmission attempt parameter, and based on at least one predetermined threshold, deciding whether or not to control channel access in the access network. The control module 4 is configured for, if it is decided so, setting at least one channel access parameter for accessing the access network based on a number of devices associated with the access network and based on the at least one predetermined threshold.

Further modifications of system 1 along the lines of the method embodiments illustrated in Figures 3, 4, 5A and 5B are also contemplated.

In this specification, reference is made TR-069, which is a protocol for communication between a customer premises equipment (CPE) and an auto-configuration server (ACS).

The present disclosure relates to a soft-QoS method, in the sense that a QoS guarantee cannot always be made because of the nature of IEEE 802.11e EDCA. Problems such as over-subscription, high level of interference and network congestion due to traffic bursts may still cause problems in performance of VoWiFi.

Embodiments of the present invention may provide at least some of the following advantages:

    1. Implementation-related and computational complexity may be reduced, because of a design-time approach rather than a runtime approach.

    2. Practical network constraints may be taken into consideration, such as limited retransmission attempts, finite MAC buffer size, etc.

    3. VoWiFi requirements may be taken into consideration.

    4. Impact from neighbor interference may be reduced. Known approaches assume a perfect clean noiseless channel, which is not realistic.

    5. In particular when using the Broadband Forum TR-069 standard, it is possible to provide a CPE-vendor-agnostic method and system, providing multi-vendor management capabilities.

    6. Fewer dropped calls and better voice calling quality of experience for users.

Below, a particular exemplary embodiment of a method according to the present invention, e.g. as performed by system 1 of Figure 1, will be described in more detail. It will be understood that the below described exemplary embodiment is meant for illustrative purposes, and is not meant to limit the scope of protection, which is determined by the appended claims.

VoWiFi carries voice traffic as data over a Wi-Fi network (thus a wireless local area network), making voice traffic vulnerable to delay or lost-in-transmission issues, like any other data transmission. When data loss, delays or corruption happen to a VoWiFi call, the effect may be much more dramatic, resulting in poor clarity as well as popping and crackling sounds, or even causing the call to drop entirely. Therefore, maintaining isochronous nature of voice packet streams by controlling delay and packet loss may be advantageous. In order to have clear VoWiFi call, QoS requirements for voice traffic may for example be defined as follows. If the packet delay of voice traffic becomes too long, the conversation may begin to sound like two parties talking over a satellite link. A 150 ms delay budget may be found acceptable for high voice quality. Packet loss of voice traffic may cause voice clipping and skips. Packet loss may for example be allowed to be no more than 1%, in order to avoid audible errors.

The particular exemplary embodiment may comprise receiving at least one packet transmission failure parameter, indicating a number of packet transmission failures in the access network. The embodiment may further comprise receiving a packet transmission attempt parameter, indicating a number of packet transmission attempts in the access network.

As a particular example using TR-069, the following TR-069 parameters (type: counters) may be received from one or more particular access points. These parameters may be converted to parameters that show the corresponding quantities during an observation time slot. This may in particular be done by subtracting previous observation time slot counters from current ones. For simplicity, we omit this procedure, and assume that all parameters represent corresponding quantities during the last observation time slot. In the following, AC. {3} denotes a voice traffic access category.

P1: Device.WiFi.AccessPoint.{i}.AC.{3}.Stats.PacketsSent

P2: Device.WiFi.AccessPoint.{i}.AC.{3}.Stats.ErrorsSent

P3: Device.WiFi.AccessPoint.{i}.AC.{3}.Stats.DiscardedPacketsSent

In other words, P1 may represent a packet transmission attempt parameter, indicating a number of packet transmission attempts in the access network, and P2 and P3 may both represent a packet transmission failure parameter, indicating a number of packet transmission failures in the access network. In this particular example, P2 may indicate the number of packet transmission errors, and P3 may indicate the number of packet discard events.

In order to analyze the QoS of voice traffic, these parameters may in this particular example be converted as follows:

Packet Error Ratio (PER): This may represent a ratio of voice packets that could not be transmitted because of errors to all voice packets that were attempted to be transmitted. Such errors may for example be due to the number of retransmissions exceeding a predefined limit.

$$PER = \frac{P_2}{P_1}$$

In other words, PER may represent a ratio of the indicated number of packet transmission errors to the number of packet transmission attempts.

Discarded Packet Ratio (DPR): This may represent another ratio of voice packets that were chosen to be discarded even though no errors had been detected, in order to prevent the packets from being transmitted. A reason for discarding such a packet may for example be to free up MAC buffer space.

$$DPR = \frac{P_3}{P_1}$$

In other words, DPR may represent a ratio of the indicated number of packet discard events to the number of packet transmission attempts.

Preferably at the ends of each observation time slot, the ratio PER and the ratio DPR may be determined. Next, they may be compared to at least one predetermined threshold, for example denoted as error threshold (ET), and/or as discard threshold (DT). If one or more of these ratios exceed the respective predetermined threshold, it may be deciding to control channel access in the access network. In order to indicate this decision, Flag E and Flag D may for example be raised, as explained with reference to Figure 5A.

In order to have clear voice quality, based on user QoE (quality of experience), the following values may preferably be used for the at least one predetermined threshold: ET=0.01, and DT=0.005, although different values may also be used, as explained with reference to Figures 3 and 4.

A discarded packet ratio may indirectly imply how heavily-congested voice traffic in an access network is, without requiring knowledge regarding buffer size and voice traffic load (that is, without requiring runtime knowledge). Intuitively, with a smaller AIFS (arbitrary interframe space) value (which is a channel access parameter), voice packets may not have to need to wait any longer in a buffer to be transmitted. Therefore, reducing an AIFS value may prevent buffer overflow in comparison to a larger AIFS size. However, a smaller AIFS value may lead to a slightly higher probability to increase collision with other transmissions. According to IEEE 802.11e EDCA, AIFS may be calculated as follows:

$$AIFS = SIFS + AIFSN \times TS$$

wherein SIFS (short inter-frame space) is the amount of time (for example expressed in microseconds) that is required for a wireless interface to process a received frame and to respond with a response frame. Typically, SIFS may be fixed, e.g. for IEEE 802.11 a/g SIFS is 10 μs. TS stands for a duration of each time slot, which is a basic unit of timing for the IEEE 802.11. AIFSN (arbitrary interframe space number) is the number of time slots in AIFS and may be used in order to adjust AIFS - therefore, AIFSN is also a channel access parameter. The corresponding TR-069 parameter of AIFSN for voice traffic is as follows:
P4: Device.WiFi.AccessPoint.{i}.AC.{3}.AIFSN

According to this particular exemplary embodiment, an AIFSN value may be set as an integer number between 2 and 15, based on a number of stations and DT (discard threshold), preferably in such a way as to satisfy DPR<DT - that is, so as to ensure that DPR is less than DT . It can be shown that there exists an (approximately) exponential relationship between the required AIFS to satisfy the relation DPR<DT, the number of stations, and DT. This relation may for example be modeled in the following as a function denoted F, e.g. AIFS=F(number of stations, DT). Furthermore, AIFSN may be be obtained from

$$AIFSN = [\frac{AIFS - SIFS}{TS}]$$

, where [] denotes the "floor" function (that is, a function mapping a real number to a largest previous integer). Because the cited parameters may be obtained at design-time, complexity may be reduced.

In other words, setting the AIFSN in this manner may be a way of setting at least one channel access parameter for accessing the access network based on a number of devices associated with the access network and based on the at least one predetermined threshold.

In the context of this example, a number of stations (also called devices) connected to an access network may be obtained using the following TR-069 parameter:
P5: Device.WiFi.AccessPoint.{i}.AssociatedDeviceNumberOfEntries

Based on a packet error ratio, alternatively or additionally, the contention window length may be modified. The CWmin and CWmax values (as explained above) may have a coarse granularity, in that they depend on an exponential setting variable ECWmin or ECWmax respectively. The values of CWmin and CWmax may for example respectively be calculated based on TR-069 parameters as follows:

$$CW_{min} = 2^{ECW_{min}} - 1$$

$$CW_{max} = 2^{ECW_{max}} - 1$$

ECWmin and ECWmax may be 4-bit variables. ECWmin and ECWmax may for example respectively be set using TR-069, through the following parameters:

P6: Device.WiFi.AccessPoint.{i}.AC.{3}.ECWmin

P7: Device.WiFi.AccessPoint.{i}.AC.{3}.ECWmax

Intuitively, with a smaller CWmin and CWmax, an access point has a lower average back-off time, and thus has more opportunities to make transmission attempts. However, when the network load increases, the mean back-off interval may preferably be increased, in order to absorb the increasing number of contending traffic flows, and in order to minimize the collision probability for those flows. In contrast, when the network load decreases, the mean back-off interval may preferably be decreased, which may reduce the spacing between successive frame transmissions. Large back-offs may significantly limit the throughput of the access network. Consequently, it may be advantageous to take into account the network load, in order to efficiently use the network capacity, by using the most appropriate back-off range. Similar to the above described AIFSN, it can be shown that the required CWmin in order to satisfy PER<ET has an (approximately) exponential relationship with network size and ET (error threshold). This function may for example be denoted as G, e.g. CWmin = G(P5, ET). Therefore, based on the IEEE 802.11e recommendation that $CW_{max} = 2CW_{min} + 1$, P6 and P7 may therefore for example be obtained from the following equations:

$$P_6 = [\log_2(1 + CW_{min})]$$

$$P_7 = [\log_2(1 + CW_{max})]$$

In a preferred embodiment of the present invention, G and/or F may be implemented as a lookup table, in order to reduce complexity significantly.

In other words, setting the contention window length in this manner may be a way of setting at least one channel access parameter for accessing the access network based on a number of devices associated with the access network and based on the at least one predetermined threshold.

In further developed embodiments of the present invention, additionally to or as an alternative to using the contention window length, it may be contemplated to use a clear channel assessment (CCA) threshold, and/or a transmit opportunity (TXOP), as defined in the IEEE 802.11e standard.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1.  A method for remotely controlling channel access in a contention-based packet-switched access network, the method comprising:

    - receiving (S21; S31; S41; S51) at least one packet transmission failure parameter, indicating a number of packet transmission failures in the access network;
    - receiving (S22; S32; S42; S52) a packet transmission attempt parameter, indicating a number of packet transmission attempts in the access network;
    - based on the received at least one packet transmission failure parameter, based on the received packet transmission attempt parameter, and based on at least one predetermined threshold, deciding (S23; S331, S332; S431, S432; S531, S532) whether to control channel access in the access network; and
    - if it is decided so, setting (S24; S34; S44; S553, S563) at least one channel access parameter value for accessing the access network based on a number of devices associated with the access network and based on the at least one predetermined threshold;

wherein the at least one packet transmission failure parameter, the packet transmission attempt parameter, and the at least one channel access parameter relate exclusively to a voice traffic access category.

2. The method of claim 1, wherein the at least one channel access parameter is an Institute of Electrical and Electronics Engineers, IEEE, Enhanced Distributed Channel Access, EDCA, parameter, according to standard IEEE 802.11e.

3. The method of any one of the previous claims, wherein the at least one packet transmission failure parameter indicates a number of packet discard events in the access network; and wherein the at least one channel access parameter comprises an arbitration inter-frame space number.

4. The method of claim 3, wherein the deciding comprises comparing (S332) a ratio of the indicated number of packet discard events to the number of packet transmission attempts to the at least one predetermined threshold, and wherein the at least one predetermined threshold comprises a threshold of circa 0.005.

5. The method of any one of the previous claims, wherein the at least one packet transmission failure parameter indicates a number of packet transmission errors in the access network; and wherein the at least one channel access parameter comprises a contention window length.

6. The method of claim 5, wherein the deciding comprises comparing (S432) a ratio of the indicated number of packet transmission errors to the number of packet transmission attempts to the at least one predetermined threshold, and wherein the at least one predetermined threshold comprises a threshold of circa 0.01.

7. The method of any one of the previous claims, wherein the at least one packet transmission failure parameter and the packet transmission attempt parameter are received from an access point of the access network.

8. A system (1) for remotely controlling channel access in a contention-based packet-switched access network, from a management centre of that access network, the system comprising:

- a receiving module (2) configured for receiving at least one packet transmission failure parameter, indicating a number of packet transmission failures in the access network; and configured for receiving a packet transmission attempt parameter, indicating a number of packet transmission attempts in the access network;
- a decision module (3) configured for, based on the received at least one packet transmission failure parameter, based on the received packet transmission attempt parameter, and based on at least one predetermined threshold, deciding whether to control channel access in the access network; and
- a control module (4) configured for, if it is decided so, setting at least one channel access parameter value for accessing the access network based on a number of devices associated with the access network and based on the at least one predetermined threshold;

wherein the at least one packet transmission failure parameter, the packet transmission attempt parameter, and the at least one channel access parameter relate exclusively to a voice traffic access category.

9. The system of claim 8, wherein the at least one channel access parameter is an Institute of Electrical and Electronics Engineers, IEEE, Enhanced Distributed Channel Access, EDCA, parameter according to standard IEEE 802.11e.

10. The system of any one of the claims 8-9, wherein the at least one packet transmission failure parameter indicates a number of packet discard events in the access network; and wherein the at least one channel access parameter comprises an arbitration inter-frame space number.

11. The system of claim 10, wherein the decision module is configured for comparing a ratio of the indicated number of packet discard events to the number of packet transmission attempts to the at least one predetermined threshold, and wherein the at least one predetermined threshold comprises a threshold of circa 0.005.

12. The system of any one of the claims 8-11, wherein the at least one packet transmission failure parameter indicates a number of packet transmission errors in the access network; and wherein the at least one channel access parameter comprises a contention window length.

13. The system of claim 12, wherein the decision module is configured for comparing a ratio of the indicated number of packet transmission errors to the number of packet transmission attempts to the at least one predetermined threshold, and wherein the at least one predetermined threshold comprises a threshold of circa 0.01.

14. The system of any one of the claims 8-13, wherein the receiving module is configured for receiving the at least one packet transmission failure parameter and the packet transmission attempt parameter from an access point of the access network.

15. A computer program product comprising a computer-executable program of instructions for performing, when executed on a computer, the steps of the method of any one of claims 1-7.


**Patentansprüche**

1. Verfahren zum Fernsteuern von Kanalzugang in einem konkurrenzbasierten paketvermittelten Zugangsnetzwerk, wobei das Verfahren Folgendes umfasst:

   - Empfangen (S21; S31; S41; S51) zumindest eines Paketübertragungsfehlerparameters, der eine Anzahl von Paketübertragungsfehlern in dem Zugangsnetzwerk anzeigt;
   - Empfangen (S22; S32; S42; S52) eines Paketübertragungsversuchsparameters, der eine Anzahl von Paketübertragungsversuchen in dem Zugangsnetzwerk anzeigt;
   - basierend auf dem empfangenen zumindest einen Paketübertragungsfehlerparameter, basierend auf dem empfangenen Paketübertragungsversuchsparameter und basierend auf zumindest einer vorbestimmten Schwelle, Entscheiden (S23; S331, S332; S431, S432; S531, S532), ob der Kanalzugang in das Zugangsnetzwerk gesteuert werden soll; und
   - wenn dies so entschieden wird, Festlegen (S24; S34; S44; S553, S563) zumindest eines Kanalzugangsparameterwerts für den Zugang zum Zugangsnetzwerk basierend auf einer Anzahl von Vorrichtungen in Verbindung mit dem Zugangsnetzwerk und basierend auf der zumindest einen vorbestimmten Schwelle;

   wobei sich der zumindest eine Paketübertragungsfehlerparameter, der Paketübertragungsversuchsparameter und der zumindest eine Kanalzugangsparameter ausschließlich auf eine Sprachverkehrszugangskategorie beziehen.

2. Verfahren nach Anspruch 1, wobei der zumindest eine Kanalzugangsparameter ein EDCA-Parameter (Enhanced Distributed Channel Access) nach IEEE (Institute of Electrical and Electronics Engineers) ist, gemäß der Norm IEEE 802.11e.

3. Verfahren nach einem der vorhergehenden Ansprüche, wobei der zumindest eine Paketübertragungsfehlerparameter eine Anzahl von Paketabwurfereignissen in dem Zugangsnetzwerk anzeigt; und wobei der zumindest eine Kanalzugangsparameter eine Arbitrierungs-Zwischenrahmenraumzahl umfasst.

4. Verfahren nach Anspruch 3, wobei das Entscheiden Vergleichen (S332) eines Verhältnisses der angezeigten Anzahl von Paketabwurfereignissen zur Anzahl von Paketübertragungsversuchen mit der zumindest einen vorbestimmten Schwelle umfasst und wobei die zumindest eine vorbestimmte Schwelle eine Schwelle von etwa 0,005 umfasst.

5. Verfahren nach einem der vorhergehenden Ansprüche, wobei der zumindest eine Paketübertragungsfehlerparameter eine Anzahl von Paketübertragungsfehlern in dem Zugangsnetzwerk anzeigt; und wobei der zumindest eine Kanalzugangsparameter eine Konkurrenzfensterlänge umfasst.

6. Verfahren nach Anspruch 5, wobei das Entscheiden Vergleichen (S432) eines Verhältnisses der angezeigten Anzahl von Paketübertragungsfehlern zur Anzahl von Paketübertragungsversuchen mit der zumindest einen vorbestimmten Schwelle umfasst und wobei die zumindest eine vorbestimmte Schwelle eine Schwelle von etwa 0,01 umfasst.

7. Verfahren nach einem der vorhergehenden Ansprüche, wobei der zumindest eine Paketübertragungsfehlerparameter und der Paketübertragungsversuchsparameter von einem Zugangspunkt des Zugangsnetzwerks empfangen werden.

8. System (1) zum Fernsteuern von Kanalzugang in einem konkurrenzbasierten paketvermittelten Zugangsnetzwerk, von einem Verwaltungszentrum dieses Zugangsnetzwerks, wobei das System Folgendes umfasst:

   - ein Empfangsmodul (2), ausgelegt zum Empfangen zumindest eines Paketübertragungsfehlerparameters, der eine Anzahl von Paketübertragungsfehlern in dem Zugangsnetzwerk anzeigt; und ausgelegt zum Empfangen eines Paketübertragungsversuchsparameters, der eine Anzahl von Paketübertragungsversuchen in dem Zugangsnetzwerk anzeigt;
   - ein Entscheidungsmodul (3), ausgelegt zum Entscheiden, basierend auf dem empfangenen zumindest einen Paketübertragungsfehlerparameter, basierend auf dem empfangenen Paketübertragungsversuchsparameter und basierend auf zumindest einer vorbestimmten Schwelle, ob der Kanalzugang in das Zugangsnetzwerk gesteuert werden soll; und
- ein Steuermodul (4), ausgelegt zum, wenn dies so entschieden wird, Festlegen zumindest eines Kanalzugangsparameterwerts für den Zugang zum Zugangsnetzwerk basierend auf einer Anzahl von Vorrichtungen in Verbindung mit dem Zugangsnetzwerk und basierend auf der zumindest einen vorbestimmten Schwelle;

wobei sich der zumindest eine Paketübertragungsfehlerparameter, der Paketübertragungsversuchsparameter und der zumindest eine Kanalzugangsparameter ausschließlich auf eine Sprachverkehrszugangskategorie beziehen.

9. System nach Anspruch 8, wobei der zumindest eine Kanalzugangsparameter ein EDCA-Parameter (Enhanced Distributed Channel Access) nach IEEE (Institute of Electrical and Electronics Engineers) ist, gemäß der Norm IEEE 802.11e.

10. System nach einem der Ansprüche 8-9, wobei der zumindest ein Paketübertragungsfehlerparameter eine Anzahl von Paketabwurfereignissen in dem Zugangsnetzwerk anzeigt und wobei der zumindest eine Kanalzugangsparameter eine Arbitrierungs-Zwischenrahmenraumzahl umfasst.

11. System nach Anspruch 10, wobei das Entscheidungsmodul ausgelegt ist zum Vergleichen eines Verhältnisses der angezeigten Anzahl von Paketabwurfereignissen zur Anzahl von Paketübertragungsversuchen mit der zumindest einen vorbestimmten Schwelle, und wobei die zumindest eine vorbestimmte Schwelle eine Schwelle von etwa 0,005 umfasst.

12. System nach einem der Ansprüche 8-11, wobei der zumindest eine Paketübertragungsfehlerparameter eine Anzahl von Paketübertragungsfehlern in dem Zugangsnetzwerk anzeigt; und wobei der zumindest eine Kanalzugangsparameter eine Konkurrenzfensterlänge umfasst.

13. System nach Anspruch 12, wobei das Entscheidungsmodul ausgelegt ist zum Vergleichen eines Verhältnisses der angezeigten Anzahl von Paketübertragungsfehlern zur Anzahl von Paketübertragungsversuchen mit der zumindest einen vorbestimmten Schwelle, und wobei die zumindest eine vorbestimmte Schwelle eine Schwelle von etwa 0,01 umfasst.

14. System nach einem der Ansprüche 8-13, wobei das Empfangsmodul ausgelegt ist zum Empfangen des zumindest einen Paketübertragungsfehlerparameters und des Paketübertragungsversuchsparameters von einem Zugangspunkt des Zugangsnetzwerks.

15. Computerprogrammprodukt, umfassend ein computerausführbares Programm von Anweisungen zum Durchführen, wenn auf einem Computer ausgeführt, der Schritte des Verfahrens nach einem der Ansprüche 1-7.

**Revendications**

1. Procédé de contrôle à distance d'un accès à un canal dans un réseau d'accès à commutation de paquets basé sur les contentions, le procédé comprenant:

   la réception (S21 ; S31 ; S41 ; S51) d'au moins un paramètre d'anomalie de transmission de paquet, indiquant un nombre d'anomalies de transmission de paquet dans le réseau d'accès;
   la réception (S22 ; S32 ; S42 ; S52) d'un paramètre de tentative de transmission de paquet, indiquant un nombre de tentatives de transmission de paquet dans le réseau d'accès;
   sur la base de l'au moins un paramètre d'anomalie de transmission de paquet reçu, sur la base du paramètre de tentative de transmission de paquet reçu et sur la base d'au moins un seuil prédéterminé, la décision (S23 ; S331, S332; S431, S432; S531, S532) relative au contrôle ou non d'un accès à un canal dans le réseau d'accès; et
   si la décision est affirmative, le réglage (S24; S34; S44; S553, S563) d'au moins une valeur de paramètre d'accès à un canal pour accéder au réseau d'accès sur la base d'un nombre de dispositifs associés au réseau d'accès et sur la base de l'au moins un seuil prédéterminé;
   l'au moins un paramètre d'anomalie de transmission de paquet, le paramètre de tentative de transmission de paquet et l'au moins un paramètre d'accès à un canal se rapportant exclusivement à une catégorie d'accès de trafic vocal.

2. Procédé selon la revendication 1, dans lequel l'au moins un paramètre d'accès à un canal est un paramètre d'accès distribué amélioré aux canaux (EDCA) de l'Institut de l'ingénierie électrique et électronique (IEEE) selon la norme IEEE 802.11e.

3. Procédé selon l'une quelconque des revendications précédentes,
   dans lequel l'au moins un paramètre d'anomalie de transmission de paquet indique un nombre d'événements de rejet de paquet dans le réseau d'accès; et
   dans lequel l'au moins un paramètre d'accès à un canal comprend un numéro d'espacement intertrame d'arbitrage.

**4.** Procédé selon la revendication 3, dans lequel la décision comprend la comparaison (S332) d'un rapport entre le nombre indiqué d'événements de rejet de paquet et le nombre de tentatives de transmission de paquet à l'au moins un seuil prédéterminé, et dans lequel l'au moins un seuil prédéterminé comprend un seuil d'environ 0,005.

**5.** Procédé selon l'une quelconque des revendications précédentes,
dans lequel l'au moins un paramètre d'anomalie de transmission de paquet indique un nombre d'erreurs de transmission de paquet dans le réseau d'accès; et dans lequel l'au moins un paramètre d'accès à un canal comprend une longueur de fenêtre de contention.

**6.** Procédé selon la revendication 5, dans lequel la décision comprend la comparaison (S432) d'un rapport entre le nombre indiqué d'erreurs de transmission de paquet et le nombre de tentatives de transmission de paquet à l'au moins un seuil prédéterminé, et dans lequel l'au moins un seuil prédéterminé comprend un seuil d'environ 0,01.

**7.** Procédé selon l'une quelconque des revendications précédentes, dans lequel l'au moins un paramètre d'anomalie de transmission de paquet et le paramètre de tentative de transmission de paquet sont reçus d'un point d'accès du réseau d'accès.

**8.** Système (1) de contrôle à distance d'un accès à un canal dans un réseau d'accès à commutation de paquets basé sur les contentions, à partir d'un centre de gestion de ce réseau d'accès, le système comprenant:

un module de réception (2), configuré pour recevoir au moins un paramètre d'anomalie de transmission de paquet, indiquant un nombre d'anomalies de transmission de paquet dans le réseau d'accès ; et configuré pour recevoir un paramètre de tentative de transmission de paquet, indiquant un nombre de tentatives de transmission de paquet dans le réseau d'accès; un module de décision (3), configuré pour, sur la base de l'au moins un paramètre d'anomalie de transmission de paquet reçu, sur la base du paramètre de tentative de transmission de paquet reçu et sur la base d'au moins un seuil prédéterminé, décider s'il faut contrôler un accès à un canal dans le réseau d'accès; et un module de contrôle (4), configuré pour, s'il en est ainsi décidé, régler au moins une valeur de paramètre d'accès à un canal pour accéder au réseau d'accès sur la base d'un nombre de dispositifs associés au réseau d'accès et sur la base de l'au moins un seuil prédéterminé; l'au moins un paramètre d'anomalie de transmission de paquet, le paramètre de tentative de transmission de paquet et l'au moins un paramètre d'accès à un canal se rapportant exclusivement à une catégorie d'accès de trafic vocal.

**9.** Système selon la revendication 8, dans lequel l'au moins un paramètre d'accès à un canal est un paramètre d'accès distribué amélioré aux canaux (EDCA) de l'Institut de l'ingénierie électrique et électronique (IEEE) selon la norme IEEE 802.11e.

**10.** Système selon l'une quelconque des revendications 8 et 9,
dans lequel l'au moins un paramètre d'anomalie de transmission de paquet indique un nombre d'événements de rejet de paquet dans le réseau d'accès; et dans lequel l'au moins un paramètre d'accès à un canal comprend un numéro d'espacement intertrame d'arbitrage.

**11.** Système selon la revendication 10, dans lequel le module de décision est configuré pour comparer un rapport entre le nombre indiqué d'événements de rejet de paquet et le nombre de tentatives de transmission de paquet à l'au moins un seuil prédéterminé, et dans lequel l'au moins un seuil prédéterminé comprend un seuil d'environ 0,005.

**12.** Système selon l'une quelconque des revendications 8 à 11,
dans lequel l'au moins un paramètre d'anomalie de transmission de paquet indique un nombre d'erreurs de transmission de paquet dans le réseau d'accès; et dans lequel l'au moins un paramètre d'accès à un canal comprend une longueur de fenêtre de contention.

**13.** Système selon la revendication 12, dans lequel le module de décision est configuré pour comparer un rapport entre le nombre indiqué d'erreurs de transmission de paquet et le nombre de tentatives de transmission de paquet à l'au moins un seuil prédéterminé, et dans lequel l'au moins un seuil prédéterminé comprend un seuil d'environ 0,01.

**14.** Système selon l'une quelconque des revendications 8 à 13, dans lequel le module de réception est configuré pour recevoir l'au moins un paramètre d'anomalie de transmission de paquet et le paramètre de tentative de transmission de paquet en provenance d'un point d'accès du réseau d'accès.

**15.** Produit de programme informatique comprenant un programme d'instructions qui est exécutable par ordinateur pour réaliser, lorsqu'il est exécuté sur un ordinateur, les étapes du procédé selon l'une quelconque des revendications 1 à 7.

FIG. 1

```
    ( START )                      ( START )
        |                              |
        v                              v
   [RECEIVING]——S21              [RECEIVING]——S31
        |                              |
        v                              v
   [RECEIVING]——S22              [RECEIVING]——S32
        |                              |
        v                              v
   [DECIDING]——S23              [DETERMINING
        |                          RATIO  ]——S331
        v                              |
   [SETTING]——S24                      v
        |                        <RATIO>DT?>——S332
        v                              |
    ( STOP )                           Y
                                       v
                                 [SETTING]——S34
                                       |
                                       v
                                   ( STOP )
```

**FIG. 2**

**FIG. 3**

EP 3 300 430 B1

**FIG. 4**

START

RECEIVING — S41

RECEIVING — S42

DETERMINING RATIO' — S431

RATIO'>ET? — S432
↓ Y

SETTING — S44

STOP

**FIG. 5A**

START

RECEIVING — S51

RECEIVING — S52

DETERMINING RATIO AND RATIO' — S531

RATIO>DT? — S551 — Y → RAISE FLAG D — S552
↓ N

RATIO'>ET? — S561 — Y → RAISE FLAG E — S562
↓ N

Ⓐ

17

S553

(A)

FLAG D? — Y → SETTING    S34

N

FLAG E? — Y → SETTING    S44

S563

N

( STOP )

## FIG. 5B

RECEIVING MODULE    2

SETTING MODULE    3

1

CONTROL MODULE    4

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015124601 A1
- EP 1737165 A1

**Non-patent literature cited in the description**

- **YAYU GAO ; XINGHUA SUN ; LIN DAI.** IEEE 802.11e EDCA Networks: Modeling, Differentiation and Optimization. *Wireless Communications, IEEE Transactions on,* July 2014, vol. 13 (7), 3863-3879
- **INAN, I. ; KECELI, F. ; AYANOGLU, E.** Analysis of the 802.11e enhanced distributed channel access function. *Communications, IEEE Transactions on,* June 2009, vol. 57 (6), 1753-1764
- **MINYOUNG SUNG ; NAMHYUN YUN.** A MAC parameter optimization scheme for IEEE 802.11e-based multimedia home networks. *Consumer Communications and Networking Conference, 2006. CCNC 2006. 3rd IEEE,* 08 January 2006, vol. 1, 390-394